# EUROPÄISCHE PATENTSCHRIFT

(11) **EP 0 874 217 B1**
(45) Veröffentlichungstag und Bekanntmachung des Hinweises auf die Patenterteilung: **17.07.2002**
(21) Anmeldenummer: 98106131.0
(22) Anmeldetag: 03.04.1998
(51) Int. Cl.: G01B 11/275

(54) **Verfahren und Vorrichtung zur Bestimmung der Radstellung eines an einem Fahrzeug montierten Rades**
Method and device for the determination of the position of a wheel mounted on an automobile
Procédé et dispositif pour la détermination de la position d'une roue montée sur une voiture

(30) Priorität: 25.04.1997 DE 19717569
(43) Veröffentlichungstag der Anmeldung: 28.10.1998
(73) Patentinhaber: Snap-On Deutschland Holding GmbH, 40822 Mettmann (DE)
(72) Erfinder: Boess, Walter, 68649 Gross-Rohrheim (DE); Longa, Simone, 21051 Arcisate (Varese) (IT)
(74) Vertreter: Nöth, Heinz, Dipl.-Phys.

(56) Entgegenhaltungen:
- EP-A- 0 581 990
- DE-A- 3 729 946

## Beschreibung

Die Erfindung betrifft ein Verfahren nach dem Patentanspruch 1 und eine Vorrichtung nach dem Patentanspruch 6.

Ein derartiges Verfahren und eine derartige Vorrichtung sind aus der EP 0 581 990 A1 bekannt. Bei der bekannten Anordnung sind an einer Drehscheibe Lichtsende- und Empfangsmittel vorgesehen. Während der Messung wird die Scheibe um eine mit der Radachse zusammenfallende Achse gedreht, so daß verschiedene Punkte des Rades bestrahlt werden und das von dort reflektierte Licht wieder empfangen wird. Dabei werden die Laufzeiten der den jeweiligen Bestrahlungspunkten zugeordneten Strahlen gemessen und in einer etwa sinusförmigen Aufzeichnungskurve aufgenommen. Aus den Bestrahlungspunkten, die bei 0° und 180° liegen, gewinnt man einen Meßwert für die Spur und aus den Bestrahlungspunkten bei 90° und 270° einen Meßwert für den Sturz.

Aus der EP 0 280 941 B1 ist es bekannt, ein geometrisch strukturiertes Lichtmuster auf das Rad zu projizieren, dieses reflektierte Lichtmuster als Bild zu empfangen und aus der geometrischen Form des empfangenen Bildes die Relativposition der Oberfläche des Rades im dreidimensionalen Raum zu bestimmen und daraus die vorbestimmte Ausrichtungscharakteristik des Rades zu ermitteln. Hierbei wird unter Anwendung bekannter Positionsbestimmungsmittel (US 4,111,557 und DE-OS 25 14 930) aus den geometrischen Daten des empfangenen Bildes die Radstellung am Fahrzeug bestimmt.

Aufgabe der Erfindung ist es, ein Verfahren und eine Vorrichtung der eingangs genannten Art zu schaffen, bei welchen unabhängig von der optischen Bildwiedergabe des auf das Rad projizierten Lichtmusters die Radstellung des am Fahrzeug montierten Rades bestimmt wird.

Diese Aufgabe wird erfindungsgemäß beim Verfahren der eingangs genannten Art durch das Kennzeichen des Patentanspruches 1 und bei der Vorrichtung der eingangs genannten Art durch das Kennzeichen des Patentanspruches 6 gelöst. Dabei werden zur Bestimmung der Radstellung eines an einem Fahrzeug montierten Rades von jeweils einer bestimmten, zumindest während des Meßvorganges ortsfesten Stelle (Sender) aus wenigstens zwei Zielstellen am Rad bestrahlt, die Strahlen von den Zielstellen reflektierten und an jeweils einer bestimmten, zumindest während des Meßvorganges ortsfesten Stelle (Empfänger) empfangen und aus den dabei gewonnenen Meßwerten die Radstellung bestimmt. Die den jeweiligen Zielstellen zugeordneten Signale werden zu bestimmten Zeitpunkten gesendet und die Zeiten vom Senden bis zum Empfang der an den jeweiligen Zielstellen reflektierten Signale gemessen. Aus den gemessenen Zeiten wird die Radstellung bestimmt. Die Meßeinrichtung ist als Zeitmeßeinrichtung ausgebildet, welche die Zeitdauer vom Sendezeitpunkt bis zum Empfangszeitpunkt des jeweiligen einer Zielstelle zugeordneten Signales mißt.

Bei den Signalen kann es sich um kurzzeitig gesendete Signale handeln, die eine bestimmte Signalform aufweisen, so daß eine Zuordnung des gesendeten Signales und des empfangenen Signales für die Zeitmessung erreicht wird. Bei der Strahlung handelt es sich bevorzugt um elektromagnetische Strahlung, die an der Oberfläche des Rades im Bereich des Scheibenrades und/oder des Reifenwulstes reflektiert werden kann. Die Strahlung kann auch im sichtbaren Wellenlängenbereich liegen.

Auf der Radoberfläche werden wenigstens zwei Zielstellen bestrahlt, die um die Radachse einen Winkelabstand voneinander aufweisen. Zur Ermittlung des Radsturzes können beispielsweise in einer durch die Radachse gehenden vertikalen Ebene diametral am Rad liegende Zielstellen bestrahlt werden. Zur Ermittlung der Radspur können in einer durch die Radachse verlaufenden horizontalen Ebene liegende Zielstellen am Rad bestrahlt werden.

Um eine Zuordnung der ausgesendeten und empfangenen Signale für die Zeitmessung zu haben, können die Signale unterschiedliche Signalfolgen oder unterschiedliche Frequenzen aufweisen. Es ist auch möglich, mit einer Trägerfrequenz bestimmte Codierungen zu übertragen und die Zeit zu messen, welche die Codierung vom Sendezeitpunkt bis zum Empfangszeitpunkt benötigt.

Anhand der Figuren wird an einem Ausführungsbeispiel die Erfindung näher erläutert. Es zeigt:
- Fig. 1:: schematisch eine Meßanordnung, die ein Ausführungsbeispiel der Erfindung ist, und
- Fig. 2:: eine schematische Darstellung der Zeitmessung.

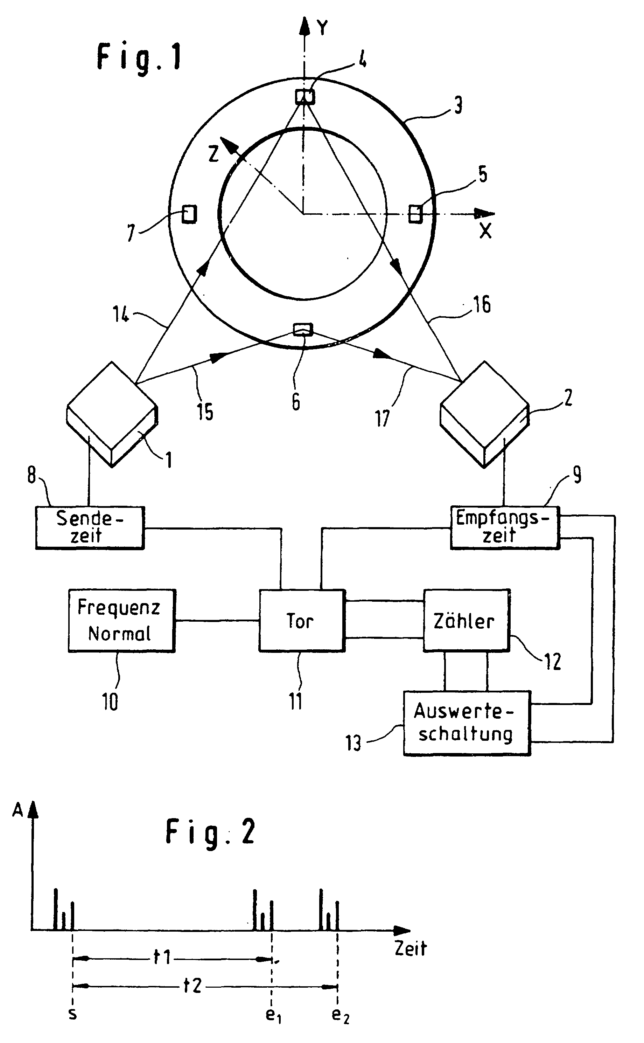

An einem zu messenden Rad 3, insbesondere Kraftfahrzeugrad, welches an einem nicht näher dargestellten Fahrzeug montiert ist, werden zur Bestimmung des Sturzwinkels zwei Zielstellen 4 und 6 an diametralen Stellen, die in einer durch die Fahrzeugachse liegenden vertikalen Ebene liegen, bestrahlt. Ferner sind zur Spurwinkel-Bestimmung zwei Zielstellen 5 und 7 vorgesehen, die in einer waagerechten, ebenfalls durch die Radachse sich erstreckende Ebene liegen. Die Außenseite des Kraftfahrzeugrades, an welchen die Zielstellen 4 bis 7 vorgesehen sind, ist im Idealfall parallel bzw. zusammenfallend mit einer durch die x- und y-Koordinatenachsen aufgespannten Ebene. Die hierzu senkrecht verlaufende Radachse liegt in der z-Koordinatenachse. Die Zielstellen 4 bis 7 können mit gleichen Winkelabständen, beispielsweise 90°-Winkelabständen um die Radachse (z-Koordinatenachse) angeordnet sein. Die Zielstellen können gebildet sein durch reflektierende Markierungen, oder sie können auch allein dadurch bestimmt sein, daß von einem Sender 1 in bestimmte Richtungen ausgesendete Strahlen auf die Radaußenfläche an den angegebenen Zielstellen 4, 5, 6 und 7 auftreffen, wobei die Radaußenfläche für diese Strahlen reflektierend ausgebildet ist. In der Fig. 1 sind zwei vom Sender 1 ausgesendete Strahlen 14 und 15 dargestellt, die auf die Zielstellen 4 und 6 für die Sturzwinkelbestimmung gerichtet sind. Die beiden Strahlen 14 und 15 werden an den Zielstellen 4 und 6 reflektiert, und reflektierte Strahlen 16, 17 werden von einer Empfangseinrichtung 2 empfangen. Die beiden ausgesendeten Strahlen 14 und 15 können zum gleichen Sendezeitpunkt ausgesendet werden. Um diese Sendezeit festzustellen, ist eine Meßeinrichtung 8 an den Sender 1 angeschlossen. Die ausgesendeten Strahlen 14 und 15 können eine spezielle Signalform aufweisen, beispielsweise eine in der Fig. 2 dargestellte Impulsform. Zum Zurücklegen der Strecke zwischen dem Sender 1, den beiden Zielstellen 4 und 6 und der Empfangseinrichtung 2 benötigen die Strahlen 14, 15 und 16, 17 eine bestimmte Zeit. In der Fig. 2 ist die Zeit für die der oberen Zielstelle 4 zugeordneten Strahlen 14, 16 mit t1 und die Zeit für die der unteren Zielstelle 6 zugeordneten Strahlen 15, 17 mit t2 bezeichnet. Da die Positionierung des zumindest während des Meßvorganges ortsfesten Senders 1 und der ebenfalls ortsfesten Empfangseinrichtung 2 sowie die Richtung der ausgesendeten und reflektierten Strahlen bekannt ist, läßt sich aus der Zeitmessung ein Rückschluß gewinnen für den Sturzwinkel, d.h. die Neigung, den das Rad 3 gegenüber einer vertikalen Ebene hat. In gleicher Weise kann durch Bestrahlen der beiden Zielstellen 5 und 7, welche sich in einer horizontalen, durch die x- und z-Koordinatenachsen aufgespannten Ebene am Rad 30 befinden, der Spurwinkel des Rades bestimmt werden. Das Rad 3 kann während der Messung auf nicht näher dargestellten Rollen in bekannter Weise aufstehen und während der Messung gedreht werden.

Für die Zeitmessung ist als Zeitbasis (Frequenz-Normal) 10 ein Oszillator vorgesehen, welcher über eine Torschaltung 11 Zählimpulse an einen Zähler 12 liefert. Die Torschaltung 11 wird zum Sendezeitpunkt s (in Fig. 2) geöffnet, so daß die von der Zeitbasis 10 gelieferten Zählimpulse dem Zähler 12 geliefert werden. Es können hierbei zwei Kanäle vorgesehen sein, wobei der eine Kanal den Strahlen 14, 16 für die obere in 12-Uhr-Stellung befindliche Zielstelle 4 und der andere Zählkanal den Strahlen 15, 17 für die untere in der 6-Uhr-Stellung befindlichen Zielstelle 6 zugeordnet sind. Sobald der reflektierte Strahl 16 empfangen wird, erzeugt eine Meßeinrichtung 8, welche an die Empfangseinrichtung 2 angeschlossen ist, ein entsprechendes Signal zum Empfangszeitpunkt e₁ und liefert dieses Signal zum Empfangszeitpunkt an die Torschaltung 11. Hierdurch wird der Zählkanal, welcher der auf die Zielstelle 4 gerichteten Strahlung (Strahlen 14, 16) zugeordnet ist, geschlossen.

Beim Empfang der von der Zielstelle 6 reflektierten Strahlung 17 zum Empfangszeitpunkt e₂ wird ebenfalls an die Torschaltung 11 ein Signal von der Meßeinrichtung 9 geliefert, so daß auch der zweite Zählkanal nach dem Zeitablauf t₂ geschlossen wird.

Das Signal kann beispielsweise mit Impulsen unterschiedlicher Amplitude A aufweisen, so daß eine Erkennung des für die Zeitmessung zu verwendenden Signales, das an den jeweiligen Zielstellen 4 bis 7 reflektiert wird, in einer Auswerteschaltung 13 möglich ist. Hierzu kann die Auswerteschaltung 13 an die Empfangseinrichtung 9 angeschlossen sein. Es ist jedoch auch möglich, daß die Empfangseinrichtung 9 so ausgebildet ist, daß sie die ausgesendete und reflektierte Signalform erkennt.

Die unterschiedlichen Zeiten t1 und t2, welche die beiden den Zielstellen 4, 6 zugeordneten Strahlen benötigen, um vom Sender 1 zu der Empfangseinrichtung 2 zu gelangen, entsprechen unterschiedlichen Wegstrecken, die vom Sturz des Rades 3 abhängig sind. Da die Richtung der Strahlen 14, 15 bzw. 16, 17 und die Positionen des Senders 1 und der Empfangseinrichtung 2, die zumindest während des Meßvorganges ortsfest beibhalten werden, fest vorgegeben und bekannt sind, läßt sich somit in der Auswerteschaltung 13, welche an den Zähler 12 angeschlossen ist und in welcher für die Auswertung diese festen Daten eingegeben sind, der Sturz des Rades 3 bestimmen. In gleicher Weise kann auch die Auswertung der auf die Zielstellen 5 und 7 gerichteten Strahlen erfolgen, wobei die Spur des Kraftfahrzeugrades 3 sich bestimmen läßt. Als Bezugssystem können die drei Koordinatenachsen x, y, und z verwendet werden, wobei der Nullpunkt dieses Koordinatensystems in der Radachse liegt und die x-Achse durch die 3-Uhr-Stellung am Rad 3 und die y-Achse durch die 12-Uhr-Stellung im Idealfall, d.h. bei Spur = Null und Sturz = Null, verlaufen. Die z-Achse verläuft senkrecht dazu und liegt in der Radachse.

Das x-, y- und z-Koordinatenachsenbezugssystem kann auch eine andere Positionierung haben, wobei jedoch auch diese Positionierung bezüglich der Richtung der Strahlen 14, 15 bzw. 16, 17 und der Anordnung des Senders 1 und der Empfangseinrichtung 2 fest vorgegeben ist und für die Auswertung in der Auswerteschaltung 13 bekannt ist. In der Auswerteschaltung 13 erfolgt.dann aufgrund der aus der Zeitmessung gewonnenen Positionierung der Zielstellen 4, 6 bzw. 5, 7 im Raum bezüglich des Senders 1 und der Empfangseinrichtung 2 sowie der Strahlrichtungen die Bestimmung der Radstellung des Rades 3 am Fahrzeug.

Für die unterschiedlichen Radstellungswinkeln zugeordnete Zielstellen 4, 6 (Sturz) und 5, 7 (Spur) können Strahlen unterschiedlicher Charakteristik vorgesehen sein, so daß eine gleichzeitige Bestrahlung aller Zielstellen am Rad 3 möglich ist.

## Patentansprüche

1. Verfahren zur Bestimmung der Radstellung eines an einem Fahrzeug montierten Rades, bei dem zumindest zwei diametrale, einem bestimmten Radstellungswinkel zugeordnete Zielstellen am Rad von einem Sender aus bestahlt und die von den Zielstellen reflektierten Strahlen von einem Empfänger empfangen werden und bei dem die Laufzeiten der Strahlen vom Aussenden bis zum Empfang gemessen werden,
**dadurch gekennzeichnet,**
**daß** die wenigstens zwei diametralen Zielstellen mit räumlich vorgegebenen Bestrahlungs- und Reflektionsrichtungen von einer bestimmten Stelle aus bestrahlt und die reflektierten Strahlen an einer bestimmten Stelle empfangen werden und
**daß** der Radstellungswinkel aus den bestimmten Stellen des Senders und Empfängers, den vorgegebenen Bestrahlungs- und Reflektionsrichtungen sowie den gemessenen Laufzeiten der Strahlen bestimmt wird.

2. Verfahren nach Anspruch 1, **dadurch gekennzeichnet, daß** die beiden auf die diametralen Zielstellen gerichteten Strahlen zum gleichen Zeitpunkt ausgesendet werden.

3. Verfahren nach Anspruch 1 oder 2, **dadurch gekennzeichnet, daß** die für die Zielstellen unterschiedlicher Radstellungswinkel (Sturz, Spur) bestimmten Signale unterschiedliche Charakteristiken aufweisen.

4. Verfahren nach einem der Ansprüche 1 bis 3, **dadurch gekennzeichnet, daß** die Signale unterschiedliche Signalformen aufweisen.

5. Verfahren nach einem der Ansprüche 1 bis 4, **dadurch gekennzeichnet, daß** die Signale unterschiedliche Frequenzen aufweisen.

6. Vorrichtung zur Bestimmung der Radstellung eines an einem Fahrzeug montierten Rades mit einem Sender (1) zum Aussenden von Strahlen (14,15) in Richtung auf wenigstens zwei einem Radstellungswinkel zugeordneten Zielstellen (4,5,6,7) am Rad, einem Empfänger (12) zum Empfangen der von den Zielstellen reflektierten Strahlen, einer Zeitmeßeinrichtung, welche die Laufzeiten der Strahlen vom Aussenden bis zum Empfang mißt, und einer Auswerteeinrichtung (13), welche die Meßwerte zur Bestimmung der Radstellung auswertet,
**dadurch gekennzeichnet ,**
**daß** der Sender (1) und der Empfänger (2) an bestimmten Positionen angeordnet sind und der Sender (1) zwei Strahlen (14, 15) auf diametrale Zielstellen (4, 6 oder 5, 7) mit bestimmter räumlicher Ausrichtung aussendet und daß die Auswerteeinrichtung (13) so ausgestattet ist, daß aus den Positionen des Senders (1) und Empfängers (2), den Richtungen der Strahlen (14 - 17) und den Laufzeiten der Strahlen (14 - 17) der Radstellungswinkel bestimmbar ist.

## Claims

1. A method of determining the position of a wheel mounted on a vehicle, wherein at least two diametral target locations on the wheel, which are associated with a given wheel position angle, are irradiated from a transmitter and the beams reflected by the target locations are received by a receiver and wherein the transit times of the beams from emission to reception are measured, **characterised in that** the at least two diametral target locations are irradiated with spatially predetermined irradiation and reflection directions from a given side and the reflected beams are received at a given location and that the wheel position angle is determined from the given locations of the transmitter and receiver, the predetermined irradiation and reflection directions and the measured transit times of the beams.

2. A method according to claim 1 **characterised in that** the two beams which are directed on to the diametral target locations are emitted at the same time.

3. A method according to claim 1 or claim 2 **characterised in that** the signals intended for the target locations of different wheel position angles (camber, track) have different characteristics.

4. A method according to one of claims 1 to 3 **characterised in that** the signals have different signal shapes.

5. A method according to one of claims 1 to 4 **characterised in that** the signals have different frequencies.

6. Apparatus for determining the position of a wheel mounted on a vehicle, comprising a transmitter (1) for emitting beams (14,15) in a direction towards at least two target locations (4, 5, 6, 7) on the wheel, which are associated with a wheel position angle, a receiver (12) for receiving the beams reflected by the target locations, a time measuring device which measures the transit times of the beams from emission to reception, and an evaluation device (13) which evaluates the measurement values for determining the wheel position, **characterised in that** the transmitter (1) and the receiver (2) are arranged at given positions and the transmitter (1) emits two beams (14, 15) on to diametral target locations (4, 6 or 5, 7) with a given spatial orientation and that the evaluation device (13) is so designed that the wheel position angle can be determined from the positions of the transmitter (1) and receiver (2), the directions of the beams (14-17) and the transit times of the beams (14-17).

## Revendications

1. Procédé de détermination de la position d'une roue montée sur un véhicule automobile, dans lequel on expose à un rayonnement provenant d'un émetteur au moins deux points cibles diamétraux sur la roue associés à un angle déterminé de la position de la roue et on reçoit par un récepteur les rayonnements réfléchis par les points cibles et dans lequel on mesure les durées de parcours des rayonnements de l'émission à la réception,
**caractérisé**
**en ce que** l'on envoie un rayonnement d'un point déterminé sur les aux moins deux points cibles diamétraux avec des directions d'incidence et de réflexion données à l'avance dans l'espace et on reçoit le rayonnement réfléchi en un point déterminé et on ce que l'on détermine l'angle de position de la roue à partir des points déterminés de l'émetteur et du récepteur, des directions données à l'avance d'incidence et de réflexion, ainsi que des durées de parcours des rayonnements qui ont été mesurées.

2. Procédé selon la revendication 1, **caractérisé en ce que** l'on émet au même instant les deux rayonnements dirigés sur les points cibles diamétraux.

3. Procédé selon la revendication 1 ou 2, **caractérisé en ce que** les signaux destinés aux points cibles d'angle de position de la roue (carrossage, pincement) différents ont des caractéristiques différentes.

4. Procédé selon l'une des revendications 1 à 3, **caractérisé en ce que** les signaux ont des formes de signaux différents.

5. Procédé selon l'une des revendications 1 à 4, **caractérisé en ce que** les signaux ont des fréquences différentes.

6. Dispositif de détermination de la position d'une roue montée sur un véhicule automobile, comprenant un émetteur (1) d'émission de rayonnements (14, 15) en direction d'au moins deux points (4, 5, 6, 7) cibles sur la roue associés à un angle de la position de la roue, un récepteur (12) de réception du rayonnement réfléchi par les points cibles, un dispositif de mesure du temps qui mesure les temps de parcours des rayonnements de l'émission jusqu'à la réception et un dispositif (13) d'exploitation qui exploite les valeurs mesurées pour déterminer la position de la roue,
**caractérisé**
**en ce que** l'émetteur (1) et le récepteur (2) sont disposés en des positions déterminées et l'émetteur (1) émet suivant une direction déterminée dans l'espace deux rayonnements (14, 15) sur des points (4, 5, 6, 7) cibles diamétraux et en ce que le dispositif (13) d'exploitation est tel qu'il peut déterminer l'angle de position de la roue à partir des positions de l'émetteur (1) et du récepteur (2), à partir des directions des rayonnements (14 à 17) et à partir des durées de parcours des rayonnements (14 à 17).
